# EUROPÄISCHE PATENTSCHRIFT

(11) **EP 3 354 495 B1**
(45) Veröffentlichungstag und Bekanntmachung des Hinweises auf die Patenterteilung: **16.12.2020**
(21) Anmeldenummer: 17153666.7
(22) Anmeldetag: 30.01.2017
(51) Int. Cl.: B60D 5/00, B61D 17/20, B62D 47/02

(54) **MITTELBÜGELSYSTEM FÜR EIN MEHRGLIEDRIGES FAHRZEUG**
CENTRAL BRACKET SYSTEM FOR AN ARTICULATED VEHICLE
SYSTÈME DE FOURCHE D'ARTICULATION CENTRALE POUR UN VÉHICULE ARTICULÉ

(43) Veröffentlichungstag der Anmeldung: 01.08.2018
(73) Patentinhaber: ATG Autotechnik GmbH, 22962 Siek (DE)
(72) Erfinder: Browne, Denis, 22946 Trittau (DE)
(74) Vertreter: Glawe, Delfs, Moll

(56) Entgegenhaltungen:
- EP-A1- 0 897 337
- EP-A1- 2 384 913
- DE-A1-102010 011 903

## Beschreibung

Die Erfindung betrifft ein Mittelbügelsystem für ein Fahrzeuggelenk, das zwischen einem ersten Wagen und einem zweiten Wagen eines mehrgliedrigen Fahrzeugs angeordnet ist. Das Mittelbügelsystem umfasst einen Mittelbügel, der sich in Querrichtung erstreckt, sowie einen Kabelstrang, der sich zwischen dem ersten Wagen und dem zweiten Wagen erstreckt. Der Mittelbügel umschließt einen für Passagiere bestimmten Durchgang. Der Kabelstrang ist oberhalb des Durchgangs angeordnet.

Solche Mittelbügelsysteme können beispielsweise bei Gelenkbussen verwendet werden oder bei anderen Arten von straßengebundenen oder schienengebundenen mehrgliedrigen Fahrzeugen. Bei diesen Fahrzeugen ist während der Fahrt ein Übergang der Passagiere zwischen den Wagen möglich. Um die Passagiere vor Umgebungseinflüssen zu schützen, wird der Übergang zwischen den Wagen normalerweise mit einem Faltenbalg versehen, der das Fahrzeuggelenk umgibt.

Es gibt technische Funktionen, die mehrere Wagen eines mehrgliedrigen Fahrzeugs betreffen. Beispielsweise kann ein vorne sitzender Fahrer einen Lichtschalter betätigen, um ein Rücklicht am hinteren Ende des Fahrzeugs in Betrieb zu setzen. Dafür ist ein elektrisches Kabel erforderlich, das sich über den Zwischenraum zwischen den Wagen hinweg erstreckt. Weitere Funktionen erfordern Hydraulikleitungen, Luftschläuche und sonstige Versorgungsleitungen zwischen den Wagen.

In Niederflurfahrzeugen, bei denen der für die Passagiere bestimmte Boden möglichst tief angeordnet ist, bleibt unterhalb des Durchgangs nur wenig Platz. Mehr Platz steht oberhalb des Durchgangs zur Verfügung, weswegen die Kabel häufig dort geführt sind.

Um zu verhindern, dass die Kabel beim Überfahren von Bodenwellen oder bei Unebenheiten an dem Mittelbügel anstoßen, ist eine Führung der Kabel relativ zu dem Mittelbügel erforderlich. Die bekannten Systeme (EP 0 897 337 A1, EP 2 384 913 A1) sind komplex und aufwändig in der Herstellung.

Der Erfindung liegt die Aufgabe zugrunde, ein kostengünstiges Mittelbügelsystem vorzustellen, bei dem der Kabelstrang zuverlässig geführt ist. Ausgehend vom genannten Stand der Technik wird die Aufgabe gelöst mit den Merkmalen des Anspruchs 1. Vorteilhafte Ausführungsformen sind in den Unteransprüchen angegeben.

Erfindungsgemäß umfasst das Mittelbügelsystem einen Führungshebel, der über ein erstes Schwenkgelenk mit dem Mittelbügel verbunden ist und der über ein zweites Schwenkgelenk mit dem Kabelstrang verbunden ist. Die Schwenkachse des ersten Schwenkgelenks und die Schwenkachse des zweiten Schwenkgelenks schneiden eine senkrechte Längsebene. Durch einen solchen Führungshebel kann einerseits eine definierte Führung für den Kabelstrang gewährleistet werden, während andererseits die erforderliche Bewegungsfreiheit zwischen dem Kabelstrang und dem Mittelbügel erhalten bleibt.

Kabel im Sinne der vorliegenden Erfindung dienen dazu, technische Funktionen der Wagen des mehrgliedrigen Fahrzeugs miteinander zu verknüpfen. Der Begriff Kabel umfasst alle Versorgungsleitungen, über die Signale oder Kräfte zwischen den Wagen übertragen werden. Vom Begriff Kabel umfasst sind insbesondere elektrische Kabel, Glasfaserleitungen, Hydraulikleitungen, Luftschläuche für Klimaanlage und Heizung. Bei dem erfindungsgemäßen Mittelbügelsystem erstreckt sich ein Kabelstrang aus einer Mehrzahl solcher Kabel über den Zwischenraum zwischen den beiden an das Fahrzeuggelenk angrenzenden Wagen hinweg.

Die beiden Wagen können ein Vorderwagen und ein Hinterwagen eines zweigliedrigen Fahrzeugs sein, beispielsweise eines Gelenkbusses. Möglich ist auch, dass ausgehend von dem Fahrzeuggelenk in einer oder beiden Längsrichtungen mehr als ein Wagen angeordnet ist. Die Längsrichtung schließt mit dem Mittelbügel einen rechten Winkel ein. Eine senkrechte Längsebene ist eine vertikale Ebene, die sich in Längsrichtung erstreckt.

Die Bewegungen, die im Betrieb des mehrgliedrigen Fahrzeugs zwischen dem ersten Wagen und dem zweiten Wagen stattfinden, sind komplex. Sie umfassen Drehen, Nicken, Wanken sowie Kombinationen daraus. Die Bewegungen, die der Kabelstrang und der Mittelbügel dabei im Zwischenraum zwischen dem Vorderwagen und dem Hinterwagen vollführen, sind nicht immer synchron.

Durch den erfindungsgemäßen Führungshebel wird einerseits die erforderliche Bewegungsfreiheit zwischen dem Kabelstrang und dem Mittelbügel ermöglicht, während andererseits solche Bewegungen unterbunden werden, die unerwünscht sind. Unerwünscht sind unter anderem Bewegungen, durch die der Kabelstrang am Mittelbügel anschlägt. Hingegen ist gewünscht, dass in Bezug auf Längsbewegungen ein begrenztes Maß an Bewegungsfreiheit zwischen dem Kabelstrang und dem Mittelbügel besteht. Indem der Kabelstrang durch den Führungshebel geführt wird, kann der Mittelbügel sich in begrenztem Ausmaß in Längsrichtung bewegen, ohne dass der Kabelstrang zu einer entsprechenden Bewegung gezwungen wird.

Die Achse des ersten Schwenkgelenks (erste Schwenkachse) kann einen Winkel von wenigstens 45°, vorzugsweise wenigstens 70° mit der senkrechten Längsebene einschließen. Insbesondere kann die Schwenkachse des ersten Schwenkgelenks sich parallel zum Mittelbügel und in horizontaler Richtung erstrecken. Dies entspricht einer Ausrichtung in Querrichtung, sodass die senkrechte Längsebene unter einem Winkel von 90° geschnitten wird. Entsprechendes kann für die Ausrichtung der Achse des zweiten Schwenkgelenks (zweite Schwenkachse) gelten. Insbesondere können die erste Schwenkachse und die zweite Schwenkachse parallel zueinander ausgerichtet sein.

Die Schwenkbewegung des Führungshebels kann in der senkrechten Längsebene stattfinden. Die Hauptrichtung des Führungshebels kann parallel zu der senkrechten Längsebene ausgerichtet sein. Das erfindungsgemäße Mittelbügelsystem kann so eingerichtet sein, dass der Führungshebel starr ist gegenüber Kräften aus anderen Richtungen, also gegenüber Kräften, die nicht in eine Schwenkbewegung des Führungshebels umgesetzt werden. Starr in diesem Sinne bedeutet, dass es außer der Schwenkbewegung keine Bewegungen gibt, durch die die erste Schwenkachse und die zweiten Schwenkachse relativ zueinander verschoben werden. Nicht ausgeschlossen sind Bewegungen, die der Führungshebel und die Schwenkachsen gemeinsam durchführen.

Das erste Schwenkgelenk, über das der Führungshebel an dem Mittelbügel aufgehängt ist, kann oberhalb des zweiten Schwenkgelenks angeordnet sein. Der Kabelstrang hängt dann an dem Führungshebel, sodass sich unter dem Einfluss der Schwerkraft ein stabiler Zustand der beiden Schwenkgelenke einstellt. Der Abstand zwischen der ersten Schwenkachse und der zweiten Schwenkachse kann zwischen 10 cm und 30 cm, vorzugsweise zwischen 15 cm und 25 cm liegen. Der Abstand der Schwenkachsen entspricht der Länge des Führungshebels.

Das zweite Schwenkgelenk kann an einer Stützeinrichtung des Kabelstrangs befestigt sein. Die Stützeinrichtung kann sich in einem gebogenen Weg entlang dem Kabelstrang erstrecken. Der gebogene Weg kann in einer horizontalen Ebene angeordnet sein. Die Stützeinrichtung kann insbesondere eine Blattfeder umfassen, die sich parallel zu dem Kabelstrang erstreckt. Als Blattfeder wird ein lang gestrecktes Element bezeichnet, das sich quer zu seiner Längsrichtung in einer Richtung leicht elastisch verformen lässt und in einer anderen Richtung schwerer elastisch verformen lässt. An der Blattfeder können Trageelemente angebracht sein, mit denen die Kabel in einer definierten Position relativ zu der Blattfeder gehalten werden. Die Trageelemente können Öffnungen für die Kabel aufweisen, sodass die Kabel über ihren gesamten Umfang mit dem Trageelement abgestützt werden können. Es kann eine Mehrzahl von Trageelementen in derselben Ebene angeordnet sein, insbesondere in der Ebene, in der der gebogene Weg der Blattfeder sich erstreckt. Dies kann insbesondere für benachbart zu dem Mittelbügel angeordnete Trageelemente gelten. Weiter von dem Mittelbügel entfernte Trageelemente können in einer tiefer gelegenen Position angebracht sein.

Der Führungshebel kann bezogen auf eine Querrichtung des Kabelstrangs mittig an dem Kabelstrang angeschlagen sein, sodass die von dem Kabelstrang ausgeübte Gewichtskraft im wesentlichen in Verlängerung des Führungshebels wirkt. Dadurch können die Lagerkräfte in den Schwenkgelenken gering gehalten werden. In einem Normalzustand des Fahrzeugs, in dem die Wagen des mehrgliedrigen Fahrzeugs in einer Ebene gerade hintereinander stehen, kann die zweite Schwenkachse senkrecht unterhalb der ersten Schwenkachse angeordnet sein.

Zwischen dem Führungshebel und dem Mittelbügel und/oder zwischen dem Führungshebel und dem Kabelstrang kann eine Linearführung ausgebildet sein. Die Linearführung kann eine geradlinige oder leicht geschwungene Bahn definieren, entlang der der Führungshebel relativ zu dem jeweiligen Element bewegt werden kann. Die Linearführung kann sich in Querrichtung erstrecken. Die Linearführung kann horizontal ausgerichtet sein. Durch eine solche Linearführung wird es möglich, dass der Kabelstrang sich auch in Querrichtung relativ zu dem Mittelbügel bewegen kann. Unerwünschte Spannungen in dem Kabelstrang können damit weiter vermindert werden.

Die Linearführung kann eine mit dem Mittelbügel verbundene Stange umfassen, an der der Führungshebel aufgehängt ist. Die Achse des ersten Schwenkgelenks kann mit der Achse der Stange übereinstimmen. Insbesondere kann an dem Führungshebel eine Aufnahme ausgebildet sein, die sich beidseitig der Stange erstreckt. Die Aufnahme kann eine Führungsfläche aufweisen, die auf der Querstange aufliegt und die bei einer Schwenkbewegung des ersten Schwenkgelenks auf der Oberfläche der Stange gleitet. Die Stange kann in Querrichtung ausgerichtet sein. Die Stange kann sich geradlinig in horizontaler Richtung erstrecken. Die Stange kann an ihrer Oberseite eine im Querschnitt abgerundete Kontur haben, insbesondere kann die Stange im Querschnitt kreisförmig sein.

Die Linearführung kann eine Rolle umfassen, sodass die Bewegung unter geringem Kraftaufwand stattfinden kann. Die Rolle kann auf der Stange laufen, an der der Führungshebel aufgehängt ist. Die Rolle kann in einer Aufnahme des Führungshebels drehbar gelagert sein. Die Oberfläche der Rolle kann zugleich eine Führungsfläche des Schwenkgelenks bilden, die bei einer Schwenkbewegung des Führungshebels relativ zu einer anderen Oberfläche der Linearführung gleitet.

Insbesondere ist es möglich, dass die Linearführung von der Stange gebildet wird, an der der Führungshebel aufgehängt ist. Eine in der Aufnahme des Führungshebels angeordnete Rolle kann bei einer der Linearführung entsprechenden Bewegung auf der Stange abrollen. Bei einer Schwenkbewegung des Führungshebels kann die Rolle eine Gleitbewegung um die Achse der Stange vollführen.

Bei mehrgliedrigen Fahrzeugen kann der Mittelbügel so geführt sein, dass er immer eine mittige Stellung zwischen den beiden angrenzenden Wagen einnimmt. Mit einem solchen Mittelbügel kann die erfindungsgemäße Lagerung für den Kabelstrang ohne weiteres verwendet werden. Möglich ist auch eine Verwendung mit Mittelbügeln, die im Betrieb des Gelenkfahrzeugs nicht auf eine mittige Position zwischen dem Vorderwagen und dem Hinterwagen festgelegt sind. Beispielsweise kann der Mittelbügel mittels einer Lenkstange in einem festen Abstand oder einem festen Mindestabstand zu dem ersten Wagen oder dem zweiten Wagen gehalten sein. Die Lenkstange kann an dem Mittelbügel angelenkt sein und eine Drehung des Mittelbügels um eine senkrechte Achse erlauben. Wenn der Mittelbügel durch eine solche Lenkstange in einem festen Abstand zu einem der Wagen gehalten wird, werden Nickbewegungen durch eine Relativbewegung zwischen dem Mittelbügel und dem anderen Wagen ausgeglichen.

Statt eines vollständig starren Lenkers kann auch eine Verbindung vorgesehen sein, die gegenüber Druckkräften starr ist, die sich aber unter Zugkräften verlängern lässt. Wenn das Gelenkfahrzeug über eine Kuppe fährt und sich der Abstand zwischen dem Vorderwagens und dem Hinterwagen im oberen Bereich deswegen vergrößert, kann der Mittelbügel sich von dem Wagen, zu dem die Verbindung besteht, entfernen und dadurch dazu beitragen, den Abstand zu überbrücken. Der Abstand zwischen dem Mittelbügel und dem Vorderwagen oder Hinterwagen, den die Lenkstange im Normalzustand definiert, ist dann zugleich der Mindestabstand. Hingegen kann der Abstand durch Zugkraft vergrößert werden.

Die Erfindung betrifft außerdem ein mehrgliedriges Fahrzeug, bei dem zwischen einem ersten Wagen und einem zweiten Wagen ein solches Mittelbügelsystem angeordnet ist. Der erste Wagen und der zweite Wagen sind über ein Fahrzeuggelenk gelenkig miteinander verbunden. Das mehrgliedrige Fahrzeug kann insbesondere ein Gelenkbus sein, bei dem das Mittelbügelsystem zwischen einem Vorderwagen und einem Hinterwagen angeordnet ist.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines Mittelbügelsystems des Gelenkfahrzeugs aus Fig. 1;
- Fig. 3:: eine Ansicht von oben auf ein erfindungsgemäßes Mittelbügelsystem;
- Fig. 4:: eine Ansicht von oben auf eine Kabelführung eines erfindungsgemäßen Mittelbügelsystems;
- Fig. 5:: die Kabelführung aus Fig. 4 in einer perspektivischen Darstellung;
- Fig. 6:: ein Detail aus Fig. 5 in vergrößerter Darstellung;
- Fig. 7:: ein anderes Detail aus Fig. 5 in vergrößerter Darstellung.

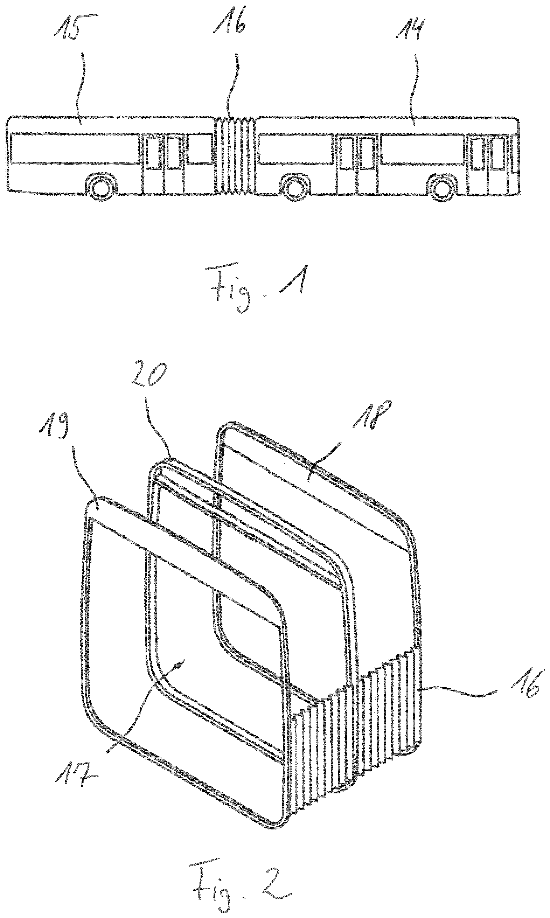

Ein in Fig. 1 gezeigter Gelenkbus umfasst einen Vorderwagen 14 und einen Hinterwagen 15. Der Vorderwagen 14 und der Hinterwagen 15 sind über ein in Fig. 1 nicht dargestelltes Fahrzeuggelenk derart miteinander verbunden, dass Passagiere während der Fahrt durch einen Durchgang 17 hindurch zwischen dem Vorderwagen 14 und dem Hinterwagen 15 wechseln können. Ein Faltenbalg 16 umgibt das Fahrzeuggelenk und den Durchgang 17. Das erfindungsgemäße Mittelbügelsystem ist im Zwischenraum zwischen dem Vorderwagen 14 und dem Hinterwagen 15 angeordnet und in Fig. 1 durch den Faltenbalg 16 verdeckt.

Fig. 2 zeigt den Endrahmen 18 des Vorderwagens 14 und den Endrahmen 19 des Hinterwagens 15. Der Faltenbalg 16 ist in Fig. 2 nur ausschnittsweise gezeigt. Zwischen dem Endrahmen 18 und dem Endrahmen 19 ist ein Mittelbügel 20 angeordnet, der dem Faltenbalg 16 zusätzlichen Halt vermittelt.

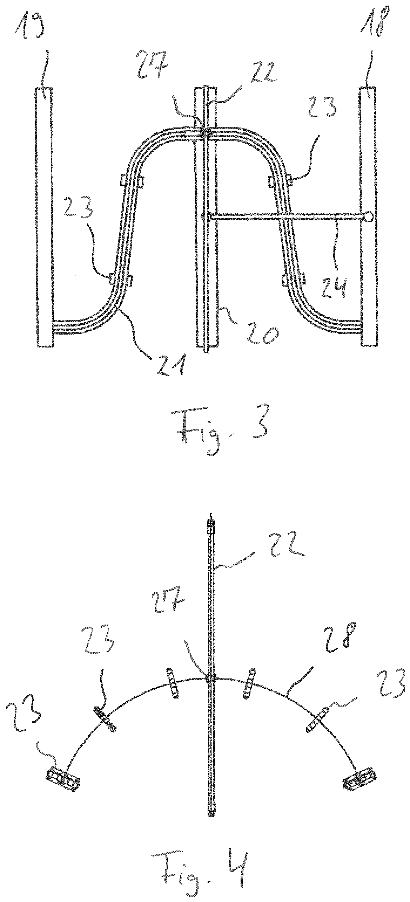

Gemäß Fig. 3 erstreckt sich ein Kabelstrang 21 zwischen dem Endrahmen 18 und dem Endrahmen 19. Die Kabel erstrecken sich in Form eines einheitlichen Strangs 21 durch den Zwischenraum zwischen dem Endrahmen 18 und dem Endrahmen 19. Der Kabelstrang 21 nimmt im Zwischenraum zwischen dem Vorderwagen 14 und dem Hinterwagen 15 einen geschwungenen Weg, der sich im Wesentlichen in einer horizontalen Ebene erstreckt. Der Kabelstrang 21 ist dadurch in der Lage, Bewegungen auszugleichen, die der Vorderwagen 14 und der Hinterwagen 15 relativ zueinander vollführen.

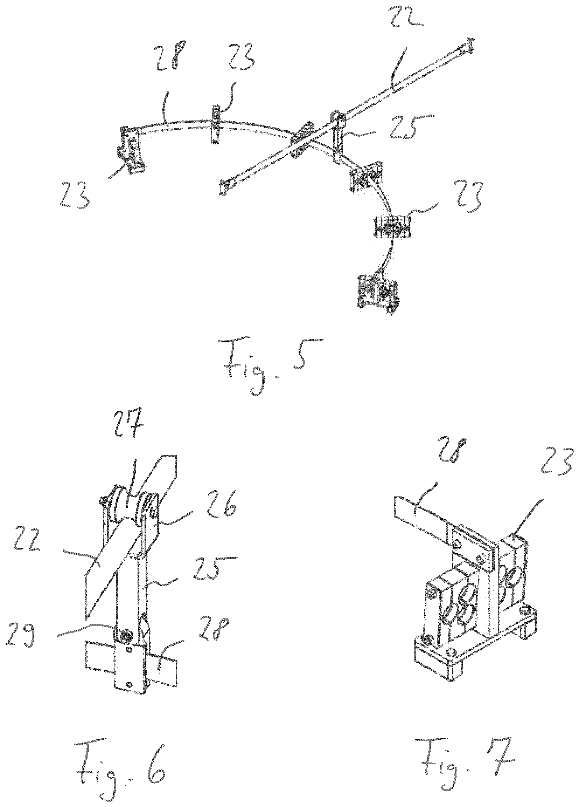

In den Figuren 4 und 5 ist die Kabelführung ohne Kabel dargestellt. Danach umfasst die Kabelführung eine mittig zwischen den Kabeln angeordnete Blattfeder 28, die sich parallel zu dem Kabelstrang erstreckt. An der Blattfeder 28, die auf unten näher erläuterte Weise mit einer Querstange 20 des Mittelbügels 20 verbunden ist, sind Trageelemente 23 aufgehängt. In den Trageelementen 23 sind gemäß Fig. 7 Öffnungen ausgebildet, durch die die Kabel des Kabelstrangs 21 hindurch geführt sind. In der beispielhaften Darstellung gemäß Fig. 7 werden auf beiden Seiten der Blattfeder 28 jeweils drei Kabel geführt. Von den insgesamt sechs Trageelementen 23, die an der Blattfeder 28 aufgehängt sind, sind die mittleren vier in derselben Höhe angeordnet wie die Blattfeder 28. Die beiden äußeren Trageelemente 23 hängen etwas tiefer. Durch die Blattfeder 28 und die Trageelemente 23 unterliegt der Kabelstrang 21 einer definierten Führung.

Der Mittelbügel 20 ist gemäß Fig. 3 über eine starre Lenkstange 24 mit dem Endrahmen 18 verbunden. Sowohl zwischen der Lenkstange 24 und dem Endrahmen 18 als auch zwischen der Lenkstange 24 und dem Mittelbügel 20 ist ein Gelenk ausgebildet, das Schwenkbewegungen um eine senkrechte Gelenkachse zulässt. Wenn der Gelenkbus also um eine Kurve fährt und in seitlicher Richtung einknickt, kann der Mittelbügel 20 die entsprechende Schwenkbewegung nachvollziehen, so dass er permanent ungefähr eine Mittelposition zwischen dem Endrahmen 18 und dem Endrahmen 19 einnimmt. Fährt der Gelenkbus hingegen über eine Kuppe, so wird die entsprechende Nickbewegung nur zwischen dem Mittelbügel 20 und dem Endrahmen 19 ausgeglichen. Der Abstand zwischen dem Endrahmen 18 und dem Mittelbügel 20 bleibt aufgrund der Lenkstange 24 konstant. Bei Nickbewegungen ist der Mittelbügel 20 also nicht in einer Mittelposition zwischen dem Endrahmen 18 und dem Endrahmen 19. Eine starre Verbindung zwischen dem Mittelbügel 20 würde dem Kabelstrang 21 unnötige Bewegungen in Längsrichtung aufzwingen. Gemäß der Erfindung ist deswegen vorgesehen, dass der Mittelbügel 20 sich in Längsrichtung relativ zu dem Kabelstrang 21 bewegen kann, sodass der Kabelstrang 21 nicht gezwungen wird, jede Längsbewegung des Mittelbügels 20 nachzuvollziehen. Die erfindungsgemäße Kabelführung, die dies ermöglicht, wird nachfolgend erläutert.

Die Kabelführung umfasst eine Querstange 22, die oberhalb eines oberen Rahmenteils des Mittelbügels 20 angeordnet ist. Die Querstange 22 erstreckt sich in Querrichtung parallel zu dem Mittelbügel 20. Zwischen der Querstange 22 und dem oberen Rahmenteil des Mittelbügels 20 bleibt ein Freiraum, durch den der Kabelstrang 21 hindurch geführt ist.

Der Kabelstrang 21 ist über einen Führungshebel 25 an der Querstange 22 aufgehängt. Der Führungshebel 25 umfasst gemäß Fig. 6 eine Aufnahme 26, in der eine Rolle 27 drehbar gelagert ist. Die Aufnahme 26 umfasst zwei Schenkel, die die Querstange 22 zwischen sich einschließen. Die ebenfalls zwischen den Schenkeln eingeschlossene Rolle 27 läuft auf der Oberseite der Querstange 22.

Die Querstange 22 ist im Querschnitt kreisförmig, sodass der Führungshebel 25 um die Achse der Querstange 22 geschwenkt werden kann. Die Rolle 27 gleitet bei einer solchen Schwenkbewegung in Umfangsrichtung auf der Oberfläche der Querstange 22.

Das untere Ende des Führungshebels 25 ist an die Blattfeder 28 angeschlossen, die in der Mitte des Kabelstrangs 21 angeordnet ist und sich parallel zu dem Kabelstrang 21 erstreckt. An der Blattfeder 28 sind die Trageelemente 23 aufgehängt, in denen die Kabel des Kabelstrangs 21 gehalten sind.

Zwischen dem Führungshebel 25 und der Blattfeder 28 ist ein Schwenkgelenk 29 ausgebildet, dessen Achse parallel zu der Querstange 22 ausgerichtet ist. Wird der Führungshebel 25 um die Querstange 22 geschwenkt, so knickt auch das Schwenkgelenk 29 ein. Bei einer Schwenkbewegung des Führungshebels 25 kann die Blattfeder 28 also ihre Ausrichtung beibehalten. Die Blattfeder 28 wird lediglich ein wenig nach oben angehoben, gemäß der Kreisbahn, die der Führungshebel 25 um die Querstange 22 beschreibt.

Eine Bewegung des Mittelbügels 20 relativ zu dem Kabelstrang 21 in Längsrichtung wird demnach aufgenommen durch eine Schwenkbewegung des Führungshebels 25 um die Querstange 22. Eine Bewegung des Mittelbügels 20 relativ zu dem Kabelstrang 21 in Querrichtung wird aufgenommen, indem die Rolle 27 des Führungshebels 25 entlang der Querstange 22 läuft. Gegenüber anderen Arten von Bewegungen ist die Kabelführung starr. Der Kabelstrang 21 wird durch den Führungshebel 25 in einem definierten Abstand zu dem Mittelbügel 20 und insbesondere zu der Querstange 22 gehalten. Es ist also sichergestellt, dass der Kabelstrang 21 nicht an dem Mittelbügel 20 anschlagen kann. Auch die Ausrichtung des Kabelstrangs 21 in Längsrichtung wird durch den Führungshebel 25 im Wesentlichen konstant gehalten.

## Patentansprüche

1. Mittelbügelsystem für ein zwischen einem ersten Wagen und einem zweiten Wagen eines mehrgliedrigen Fahrzeugs angeordnetes Fahrzeuggelenk, umfassend einen in Querrichtung ausgerichteten Mittelbügel (20) und einen sich zwischen dem ersten Wagen (14) und dem zweiten Wagen (15) erstreckenden Kabelstrang (21), wobei der Mittelbügel (15) einen für Passagiere bestimmten Durchgang (17) umschließt und wobei der Kabelstrang (21) oberhalb des Durchgangs (17) angeordnet ist, **gekennzeichnet durch** einen Führungshebel (25), der über ein erstes Schwenkgelenk (22, 27) mit dem Mittelbügel (20) verbunden ist und der über ein zweites Schwenkgelenk (29) mit dem Kabelstrang (21) verbunden ist, **dadurch gekennzeichnet, dass** die Achse des ersten Schwenkgelenks (22, 27) und die Achse des zweiten Schwenkgelenks (29) im Normalzustand des Fahrzeugs eine senkrechte Längsebene schneiden, wobei eine senkrechte Längsebene eine vertikale Ebene ist, die sich in Längsrichtung erstreckt.

2. Mittelbügelsystem nach Anspruch 1, **dadurch gekennzeichnet, dass** die Achse des ersten Schwenkgelenks (22, 27) einen Winkel von wenigstens 45°, vorzugsweise von wenigstens 70°, weiter vorzugsweise von 90° mit der senkrechten Längsebene einschließt.

3. Mittelbügelsystem nach Anspruch 1 oder 2, **dadurch gekennzeichnet, dass** die Achse des zweiten Schwenkgelenks (29) einen Winkel von wenigstens 45°, vorzugsweise von wenigstens 70°, weiter vorzugsweise von 90° mit der senkrechten Längsebene einschließt.

4. Mittelbügelsystem nach einem der Ansprüche 1 bis 3, **dadurch gekennzeichnet, dass** das erste Schwenkgelenk (22, 27) oberhalb des zweiten Schwenkgelenks (29) angeordnet ist.

5. Mittelbügelsystem nach einem der Ansprüche 1 bis 4, **dadurch gekennzeichnet, dass** der Abstand zwischen der Achse des ersten Schwenkgelenks (22, 27) und der Achse des zweiten Schwenkgelenks (29) zwischen 10 cm und 30 cm, vorzugsweise zwischen 15 cm und 25 cm liegt.

6. Mittelbügelsystem nach einem der Ansprüche 1 bis 5, **dadurch gekennzeichnet, dass** das zweite Schwenkgelenk (29) an einer Stützeinrichtung (28) des Kabelstrangs (21) befestigt ist, wobei die Stützeinrichtung (28) sich in einem gebogenen Weg entlang dem Kabelstrang (21) erstreckt.

7. Mittelbügelsystem nach einem der Ansprüche 1 bis 6, **dadurch gekennzeichnet, dass** die von dem Kabelstrang (21) ausgeübte Gewichtskraft in Verlängerung des Führungshebels (25) wirkt.

8. Mittelbügelsystem nach einem der Ansprüche 1 bis 7, **dadurch gekennzeichnet, dass** zwischen dem Führungshebel (25) und dem Mittelbügel (20) und/oder zwischen dem Führungshebel (25) und dem Kabelstrang (21) eine Linearführung ausgebildet ist.

9. Mittelbügelsystem nach Anspruch 8, **dadurch gekennzeichnet, dass** die Linearführung eine mit dem Mittelbügel verbundene Stange (22) umfasst, an der der Führungshebel (25) aufgehängt ist.

10. Mittelbügelsystem nach Anspruch 9, **dadurch gekennzeichnet, dass** die Achse des ersten Schwenkgelenks (22, 27) mit der Achse der Stange (22) übereinstimmt.

11. Mittelbügelsystem nach Anspruch 9 oder 10, **dadurch gekennzeichnet, dass** an dem Führungshebel (25) eine Aufnahme (26) ausgebildet ist, die sich beidseitig der Stange (22) erstreckt, und dass in der Aufnahme (26) eine Rolle (27) gelagert ist.

12. Mittelbügelsystem nach einem der Ansprüche 1 bis 11, **gekennzeichnet durch** eine Lenkstange (24), durch die der Mittelbügel (20) in einem festen Abstand oder einem festen Mindestabstand zu dem ersten Wagen (14) oder zu dem zweiten Wagen (15) gehalten wird.

## Claims

1. Middle hoop system for a vehicle joint arranged between a first vehicle section and a second vehicle section of a multi-unit vehicle, comprising a middle hoop (20), which is oriented in a transverse direction, and a cable strand (21) which extends between the first vehicle section (14) and the second vehicle section (15), the middle hoop (15) surrounding a passage (17) intended for passengers, and the cable strand (21) being arranged above the passage (17), **characterized by** a guide lever (25) which is connected to the middle hoop (20) by means of a first pivot joint (22, 27) and which is connected to the cable strand (21) by means of a second pivot joint (29), **characterized in that** the axis of the first pivot joint (22, 27) and the axis of the second pivot joint (29) intersecting a vertical longitudinal plane in the normal state, wherein a vertical longitudinal plane is a vertical plane which extends in the longitudinal direction.

2. Middle hoop system according to Claim 1, **characterized in that** the axis of the first pivot joint (22, 27) encloses an angle of at least 45°, preferably of at least 70°, more preferably of 90°, with the vertical longitudinal plane.

3. Middle hoop system according to Claim 1 or 2, **characterized in that** the axis of the second pivot joint (29) encloses an angle of at least 45°, preferably of at least 70°, more preferably of 90°, with the vertical longitudinal plane.

4. Middle hoop system according to one of Claims 1 to 3, **characterized in that** the first pivot joint (22, 27) is arranged above the second pivot joint (29).

5. Middle hoop system according to one of Claims 1 to 4, **characterized in that** the spacing between the axis of the first pivot joint (22, 27) and the axis of the second pivot joint (29) lies between 10 cm and 30 cm, preferably between 15 cm and 25 cm.

6. Middle hoop system according to one of Claims 1 to 5, **characterized in that** the second pivot joint (29) is fastened to a support device (28) of the cable strand (21), the support device (28) extending in a curved path along the cable strand (21).

7. Middle hoop system according to one of Claims 1 to 6, **characterized in that** the weight force exerted by the cable strand (21) acts in an elongation of the guide lever (25).

8. Middle hoop system according to one of Claims 1 to 7, **characterized in that** a linear guide is formed between the guide lever (25) and the middle hoop (20) and/or between the guide lever (25) and the cable strand (21).

9. Middle hoop system according to Claim 8, **characterized in that** the linear guide comprises a rod (22) which is connected to the middle hoop and on which the guide lever (25) is suspended.

10. Middle hoop system according to Claim 9, **characterized in that** the axis of the first pivot joint (22, 27) coincides with the axis of the rod (22).

11. Middle hoop system according to Claim 9 or 10, **characterized in that**, on the guide lever (25), there is formed a receptacle (26) which extends to both sides of the rod (22), and **in that** a roller (27) is mounted in the receptacle (26).

12. Middle hoop system according to one of Claims 1 to 11, **characterized by** a control rod (24) by means of which the middle hoop (20) is held with a fixed spacing or a fixed minimum spacing to the first vehicle section (14) or to the second vehicle section (15).

## Revendications

1. Système de fourche centrale d'une articulation de véhicule disposée entre une première voiture et une deuxième voiture d'un véhicule à plusieurs parties, comprenant une fourche centrale (20) orientée dans la direction transversale et un faisceau de câbles (21) s'étendant entre la première voiture (14) et la deuxième voiture (15), la fourche centrale (15) entourant un passage (17) prévu pour les passagers et le faisceau de câbles (21) étant disposé au-dessus du passage (17), **caractérisé par** un levier de guidage (25) qui est connecté à la fourche centrale (20) par le biais d'une première articulation pivotante (22, 27) et qui est connecté au faisceau de câbles (21) par le biais d'une deuxième articulation pivotante (29),
**caractérisé en ce que** l'axe de la première articulation pivotante (22, 27) et l'axe de la deuxième articulation pivotante (29), dans l'état normal du véhicule, coupent un plan longitudinal vertical, un plan longitudinal vertical étant un plan vertical qui s'étend dans la direction longitudinale.

2. Système de fourche centrale selon la revendication 1, **caractérisé en ce que** l'axe de la première articulation pivotante (22, 27) forme un angle d'au moins 45°, de préférence d'au moins 70°, plus préférablement de 90° avec le plan longitudinal vertical.

3. Système de fourche centrale selon la revendication 1 ou 2, **caractérisé en ce que** l'axe de la deuxième articulation pivotante (29) forme un angle d'au moins 45°, de préférence d'au moins 70°, plus préférablement de 90° avec le plan longitudinal vertical.

4. Système de fourche centrale selon l'une quelconque des revendications 1 à 3, **caractérisé en ce que** la première articulation pivotante (22, 27) est disposée au-dessus de la deuxième articulation pivotante (29).

5. Système de fourche centrale selon l'une quelconque des revendications 1 à 4, **caractérisé en ce que** la distance entre l'axe de la première articulation pivotante (22, 27) et l'axe de la deuxième articulation pivotante (29) est comprise entre 10 cm et 30 cm, de préférence entre 15 cm et 25 cm.

6. Système de fourche centrale selon l'une quelconque des revendications 1 à 5, **caractérisé en ce que** la deuxième articulation pivotante (29) est fixée à un dispositif de support (28) du faisceau de câbles (21), le dispositif de support (28) s'étendant suivant une trajectoire courbe le long du faisceau de câbles (21).

7. Système de fourche centrale selon l'une quelconque des revendications 1 à 6, **caractérisé en ce que** la force de pesanteur exercée par le faisceau de câbles (21) agit dans le prolongement du levier de guidage (25).

8. Système de fourche centrale selon l'une quelconque des revendications 1 à 7, **caractérisé en ce qu'**entre le levier de guidage (25) et la fourche centrale (20) et/ou entre le levier de guidage (25) et le faisceau de câbles (21) est réalisé un guide linéaire.

9. Système de fourche centrale selon la revendication 8, **caractérisé en ce que** le guide linéaire comprend une barre (22) connectée à la fourche centrale, à laquelle est accroché le levier de guidage (25).

10. Système de fourche centrale selon la revendication 9, **caractérisé en ce que** l'axe de la première articulation pivotante (22, 27) coïncide avec l'axe de la barre (22).

11. Système de fourche centrale selon la revendication 9 ou 10, **caractérisé en ce qu'**un logement (26) est réalisé au niveau du levier de guidage (25), lequel s'étend de part et d'autre de la barre (22) et **en ce qu'**un rouleau (27) est supporté dans le logement (26).

12. Système de fourche centrale selon l'une quelconque des revendications 1 à 11, **caractérisé par** une barre de direction (24) par laquelle la fourche centrale (20) est retenue à une distance fixe ou à une distance minimale fixe de la première voiture (14) ou de la deuxième voiture (15).
